# EUROPÄISCHE PATENTANMELDUNG

(11) **EP 3 667 257 A2**
(43) Veröffentlichungstag der Anmeldung: **17.06.2020**
(21) Anmeldenummer: 19212186.1
(22) Anmeldetag: 28.11.2019
(51) Int. Cl.: G01F 1/66

(54) **MESSEINRICHTUNG ZUR ERMITTLUNG EINER FLUIDGRÖSSE**

(30) Priorität: 12.12.2018 DE 102018009753
(71) Anmelder: Diehl Metering GmbH, 91522 Ansbach (DE)
(72) Erfinder: Ploß, Peter, 95445 Bayreuth (DE); Sturm, Thomas, 91623 Sachsen (DE); Mayle, Michael, 91522 Ansbach (DE); Benkert, Andreas, 91522 Ansbach (DE)
(74) Vertreter: Diehl Patentabteilung

(57) **Zusammenfassung**

Messeinrichtung zur Ermittlung einer Fluidgröße mit einer Steuereinrichtung (2), einem Messrohr (3) und einem an dem Messrohr (3) angeordneten ersten Schwingungswandler (5), wobei der erste Schwingungswandler (5) wenigstens ein Schwingelement (17, 18) umfasst, wobei das Schwingelement (17, 18) einen Schwingkörper (30), eine messrohrseitige Elektrode (31) und eine messrohrabgewandte Elektrode (32) umfasst, wobei sich die messrohrseitige Elektrode (31) auf eine erste Stirnfläche (34) des Schwingkörpers (30) erstreckt, wobei sich die messrohrabgewandte Elektrode (32) auf eine zweite Stirnfläche (36) erstreckt, die der ersten Stirnfläche (34) gegenüberliegt, wobei ein jeweiliges leitfähiges Kontaktelement (28, 29, 39, 43, 44) die messrohrseitige Elektrode (31) an der ersten Stirnfläche (34) und die messrohrabgewandte Elektrode (32) an der zweiten Stirnfläche (36) elektrisch und mechanisch derart kontaktiert, dass das Schwingelement (17, 18) durch die die Kontaktelemente (28, 29, 39, 43, 44) gehaltert ist, wobei durch die Steuereinrichtung (2) über diese elektrische Kontaktierung eine Spannung zwischen der messrohrseitigen und der messrohrabgewandten Elektrode (31, 32) variierbar ist, um durch das Schwingelement (17, 18) eine in einer Seitenwand (9) des Messrohrs (3) geführte Welle anzuregen.

## Beschreibung

Die Erfindung betrifft eine Messeinrichtung zur Ermittlung einer ein Fluid und/oder eine Fluidströmung des Fluids betreffenden Fluidgröße mit einer Steuereinrichtung, einem Messrohr, das dazu dient, das Fluid aufzunehmen und/oder zu führen, und einem an dem Messrohr angeordneten ersten Schwingungswandler, wobei der erste Schwingungswandler wenigstens ein Schwingelement umfasst.

Eine Möglichkeit einen Durchfluss oder andere ein Fluid betreffende Messgrößen zu erfassen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern beziehungsweise aus einem Laufzeitunterschied bei einer Vertauschung von Sender und Empfänger kann eine Durchflussgeschwindigkeit durch das Messrohr bestimmt werden.

Aus dem Artikel G. Lindner, "Sensors and actuators based on surface acoustic waves propagating along solid-liquid interfaces", J. Phys. D: Appl. Phys. 41 (2008) 123002, ist es bekannt, zur Anregung von geführten Wellen sogenannte Interdigitaltransducer zu nutzen, bei denen ein piezoelektrisches Element genutzt wird, das kammartig ineinandergreifende Steuerleitungen aufweist, um eine Anregung bestimmter Anregungsmoden geführter Wellen zu erreichen. Da notwendigerweise Scher-Moden des piezoelektrischen Elements angeregt werden, werden typischerweise keine hohen Wirkungsgrade der Anregung erreicht. Zudem ist eine relativ aufwendige, hochgenaue Lithographie erforderlich, um die erforderliche Elektrodenstruktur mit ausreichender Exaktheit aufzubringen, wobei häufig dennoch keine ausreichende Modenreinheit der Anregung erreicht wird.

Eine Anregung einer modenreinen geführten Welle ist jedoch für eine Nutzung in einem Ultraschallzähler hochrelevant, da der Winkel, in dem Kompressionsschwingungen in das Fluid abgestrahlt werden, von der Phasengeschwindigkeit der geführten Welle abhängt, die typischerweise in unterschiedlichen Anregungsmoden bei gleicher angeregter Frequenz unterschiedlich ist. Werden verschiedene Moden angeregt, so resultieren verschiedene Ausbreitungspfade für die Kompressionsschwingungen im Fluid, die allenfalls durch eine aufwendige Signalauswertung herausgerechnet werden können.

Der Erfindung liegt daher die Aufgabe zugrunde, eine Messeinrichtung anzugeben, die geführte Wellen zur Messung nutzt, wobei ein geringer Bauraumbedarf und ein einfacher Aufbau der genutzten Messeinrichtung realisiert werden soll.

Die Aufgabe wird erfindungsgemäß durch eine Messeinrichtung der eingangs genannten Art gelöst, wobei das Schwingelement einen Schwingkörper, eine messrohrseitige Elektrode, die an einer messrohrseitigen Seitenfläche des jeweiligen Schwingkörpers angeordnet ist, und eine messrohrabgewandte Elektrode, die an einer der messrohrseitigen Seitenfläche gegenüberliegenden, messrohrabgewandten Seitenfläche des Schwingkörpers angeordnet ist, umfasst, wobei sich die messrohrseitige Elektrode auf eine erste Stirnfläche des Schwingkörpers erstreckt, die gewinkelt zu der messrohrseitigen und der messrohrabgewandten Seitenfläche steht, wobei sich die messrohrabgewandte Elektrode auf eine zweite Stirnfläche erstreckt, die der ersten Stirnfläche gegenüber liegt, wobei ein jeweiliges leitfähiges Kontaktelement die messrohrseitige Elektrode an der ersten Stirnfläche und die messrohrabgewandte Elektrode an der zweiten Stirnfläche elektrisch und mechanisch derart kontaktiert, dass das Schwingelement durch die Kontaktelemente gehaltert ist, wobei durch die Steuereinrichtung über diese elektrische Kontaktierung eine Spannung zwischen der messrohrseitigen und der messrohrabgewandten Elektrode variierbar ist, um durch das Schwingelement eine in einer Seitenwand des Messrohrs geführte Welle anzuregen, die direkt über die Seitenwand oder indirekt über das Fluid zu einem an dem Messrohr angeordneten zweiten Schwingungswandler oder zurück zu dem ersten Schwingungswandler führbar und dort durch die Steuereinrichtung zur Ermittlung von Messdaten erfassbar ist, wobei die Fluidgröße durch die Steuereinrichtung in Abhängigkeit der Messdaten ermittelbar ist.

Im Rahmen der Erfindung wurde erkannt, dass modenreine geführte Wellen in bestimmten Fällen auch durch im Wesentlichen flach auf der Seitenwand des Messrohrs liegende Schwingelemente angeregt werden können, die Elektroden auf gegenüberliegenden Seiten aufweisen. Dies kann beispielsweise dadurch erreicht werden, dass durch eine entsprechende Wahl der Abmessungen des Schwingelements eine Eigenmode des Schwingelements auf eine Wellenlänge der gewünschten angeregten Schwingung angepasst wird oder dass mehrere Schwingelemente genutzt werden, wodurch bei einer entsprechenden Ansteuerung nicht gewünschte Schwingungsmoden im Wesentlichen vollständig durch eine destruktive Interferenz ausgelöscht werden können. Hierbei ist es jedoch erforderlich, dass Eigenschwingungen der Schwingelemente möglichst wenig gestört werden bzw. dass die Schwingelemente mit einer definierten Geometrie an dem Messrohr angebracht werden. Üblicherweise werden Schwingelemente, also beispielsweise Piezokristalle, in der gewünschten Position bezüglich des Messrohrs verklebt oder verlötet. Hierdurch können jedoch Eigenschwingungen von Schwingelementen auf schwer vorhersehbare Weise gestört werden und es ist relativ aufwändig, Schwingungswandler mit mehreren Schwingelementen mit ausreichender Genauigkeit herzustellen. Zudem können die üblichen Befestigungsarten zu Verspannungen aufgrund unterschiedlicher thermischer Ausdehnungen führen und es ist ein zusätzlicher Arbeitsschritt erforderlich, um die Schwingelemente zu kontaktieren.

Durch die erfindungsgemäß vorgesehene Kombination der auf die beiden Stirnflächen gezogenen Elektroden und der Halterung der Schwingelemente an diesen Stirnflächen durch leitfähige Kontaktelemente erfolgt die mechanische Befestigung des Schwingelements und seine Kontaktierung in einem Arbeitsschritt. Zudem kann die Positionierung des Schwingelements, beispielsweise bezüglich eines Gehäuses, an dem die Kontaktelemente vorgesehen sind, in einem einfachen Arbeitsschritt mit hoher Genauigkeit erfolgen. Da auf eine stoffschlüssige Verbindung verzichtet wird, werden zudem Spannungen aufgrund unterschiedlicher Wärmeausdehnungen von Komponenten und ähnliche Probleme vermieden. Da eine Halterung zudem durch Kräfte senkrecht zur Schwingungsrichtung erfolgt, resultiert aus der vorgeschlagenen Halterung einerseits eine deutlich geringere Einkopplung von Schwingungen in ein Gehäuse oder andere Komponenten der Messeinrichtung, die das Schwingelement oder die Schwingelemente haltern und die Eigenschwingungen der Schwingelemente werden andererseits erheblich weniger beeinflusst als bei üblichen Befestigungsmethoden.

Die Kontaktelemente können einteilig ausgebildet sein und beispielsweise aus einem entsprechend zugeschnittenen oder gestanzten Blech bestehen. Die erste und zweite Stirnfläche sind vorzugsweise parallel zueinander bzw. stehen in einem Winkel von weniger als 10°, vorzugsweise in einem Winkel von weniger als 5°, zueinander. Hierdurch kann eine besonders robuste Halterung durch die Kontaktelemente erreicht werden. Der Schwingkörper kann quaderförmig sein. Insbesondere kann er eine langgestreckte Quaderform aufweisen. Die Halterung erfolgt vorzugsweise über Stirnflächen, die sich bezüglich der Längsrichtung eines solchen quaderförmigen Schwingkörpersgegenüberliegen. Der Schwingkörper kann aus einem piezoelektrischen Material, insbesondere aus einer Piezokeramik, bestehen.

Die Messdaten können auf verschiedene Weise erfasst werden, um unterschiedliche Fluidgrößen zu bestimmen. Um beispielsweise die eingangs erwähnte Durchflussmessung zu realisieren, kann eine geführte Welle in der Seitenwand angeregt werden, die dazu geeignet ist, Kompressionsschwingungen im Fluid anzuregen, beispielsweise eine Lamb-Welle. Die Kompressionswelle wird durch das Fluid direkt oder nach wenigstens einer Reflexion wiederum in eine Seitenwand eingekoppelt und kann dort durch den zweiten Schwingungswandler erfasst werden. Andererseits kann eine Laufzeit der geführten Welle innerhalb der Seitenwand beispielsweise gemessen werden, indem eine Rayleigh-Welle, bei der im Wesentlichen ausschließlich die Außenseite der Seitenwand des Messrohrs schwingt, eine Lamb-Welle, die aufgrund der Schallgeschwindigkeit im Fluid nicht in dieses eingekoppelt werden kann, oder Ähnliches angeregt werden, womit die Welle im Wesentlichen ausschließlich durch die Seitenwand transportiert wird. Dies kann beispielsweise dazu dienen, einen Druck des Fluids zu messen, da ein solcher Druck die Seitenwand verformen beziehungsweise verspannen und somit die Schallgeschwindigkeiten in der Seitenwand beeinflussen kann. Hierbei kann eine Laufzeit der Welle zu dem zweiten Schwingungswandler oder entlang eines gewissen Ausbreitungspfades zurück zu dem ersten Schwingungswandler erfasst werden.

Im Stand der Technik sind eine Vielzahl weiterer Ansätze bekannt, um Fluidgrößen eines Fluids oder einer Fluidströmung mit Hilfe von durch das Fluid geführten Wellen, insbesondere Ultraschallwellen, zu ermitteln. Durch eine entsprechende Konfiguration beziehungsweise Programmierung der erfindungsgemäßen Messeinrichtung kann angepasst werden, welche Messdaten erfasst und welche Fluidgrößen bestimmt werden.

Das Schwingelement ist vorzugsweise kraftschlüssig durch die Kontaktelemente gehaltert. Vorzugsweise liegen im Wesentlichen ebene Kontaktabschnitte der Kontaktelemente an den entsprechenden Elektroden an den entsprechenden Stirnflächen mit einer durch die Elastizität der Kontaktelemente erzeugten Presskraft an. Alternativ wäre es auch möglich, die Schwingelemente durch entsprechend geformte Elektroden und/oder Kontaktabschnitte formschlüssig zu haltern. Ein Stoffschluss sollte vorzugsweise vermieden werden. Insbesondere ist das Schwingelement vorzugsweise weder mit den Kontaktelementen verklebt noch mit diesen verlötet.

Wenigstens eines der Kontaktelemente kann durch den mechanischen Kontakt mit dem Schwingelement elastisch verformt sein. Die Elastizität des Kontaktelements kann so gewählt sein, dass durch die aufgebrachte Klemmkraft im Wesentlichen keine bzw. nur eine geringfügige Verformung des Schwingelements erfolgt.

Wenigstens eines der Kontaktelemente kann eine Platte sein oder umfassen, die sich im Wesentlichen parallel zu der durch das Kontaktelement kontaktierten Stirnfläche erstreckt, wobei die Platte durch den Kontakt mit dem Schwingelement elastisch gebogen ist. Hierdurch wird ein sehr einfacher Aufbau der Messeinrichtung bei gleichzeitiger robuster Halterung des Schwingelements erreicht. Der Winkel zwischen Platte und Stirnfläche ist aufgrund der elastischen Biegung der Platte nicht konstant, vorzugsweise jedoch über die gesamte Länge der Platte kleiner als 10°, insbesondere kleiner als 5°.

Der erste Schwingungswandler kann mehrere der Schwingelemente aufweisen, die direkt oder über ein Kopplungselement mit einem jeweiligen Anregungsbereich der Seitenwand schwingungsgekoppelt sind, wobei die Steuereinrichtung dazu eingerichtet ist, die Schwingelemente derart anzusteuern, dass in den Anregungsbereichen jeweils eine in der Seitenwand geführte Teilwelle angeregt wird, wobei sich die Teilwellen zu der geführten Welle überlagern, wobei eine zu dämpfende Schwingungsmode durch eine destruktive Interferenz der Teilwellen zumindest teilweise ausgelöscht wird. Vorzugsweise werden genau zwei Schwingelemente genutzt, da hiermit typischerweise eine ausreichende modenreine Anregung möglich ist. Zur weiteren Erhöhung der Modenreinheit können jedoch zusätzliche Schwingelemente genutzt werden.

Eine Herausforderung für eine modenreine Anregung einer geführten Schwingung ist es, dass beispielsweise bei einer Anregung von Lamb-Wellen bei jeder Anregungsfrequenz wenigstens zwei unterschiedliche Schwingungsmoden angeregt werden können, die, wie eingangs erläutert, unterschiedliche Phasengeschwindigkeiten in der Seitenwand des Messrohrs aufweisen. Durch eine entsprechende Wahl der Anregungsfrequenz kann erreicht werden, dass nur genau zwei Schwingungsmoden, nämlich eine antisymmetrische und eine symmetrische Schwingungsmode, angeregt werden. Eine modenselektive bzw. im Wesentlichen modenreine Anregung kann nun dadurch erreicht werden, dass die nicht gewünschte dieser Schwingungsmoden, also die zu dämpfende Schwingungsmode, durch eine destruktive Interferenz der Teilwellen zumindest teilweise ausgelöscht wird. Werden beide Schwingelemente mit der gleichen Anregungsfrequenz betrieben, so ist die relative Phase einer Schwingung eines ersten Schwingungswandlers und einer durch einen zweiten Schwingungswandler angeregten Schwingungsmode, die in den Anregungsbereich des ersten Schwingungswandlers einläuft, abhängig von dem Abstand der Schwingelemente und somit der Anregungsbereiche der Schwingelemente und von der Wellenlänge der entsprechenden Mode, die für beide Moden aufgrund der unterschiedlichen Phasengeschwindigkeit unterschiedlich ist. Eine relative Phasenlage der Schwingungen der Schwingelemente kann somit so gewählt werden, dass bei einem gegebenen Abstand für die zu dämpfende Schwingungsmode eine destruktive Interferenz resultiert. Zwei Möglichkeiten hierfür werden im Folgenden näher erläutert.

Eine technisch besonders einfache Möglichkeit eine destruktive Interferenz zu erreichen, ist es, die Anregungsfrequenz und den Abstand der Schwingelemente so zu wählen, dass der Abstand zwischen den Mitten der Anregungsbereiche der halben Wellenlänge der zu dämpfenden Schwingungsmode entspricht. Schwingen die Schwingelemente nun mit gleicher Polarität, so resultiert eine destruktive Interferenz für die zu dämpfende Schwingungsmode. Alternativ wäre es auch möglich, den Abstand so zu wählen, dass er der Wellenlänge der zu dämpfenden Schwingungsmode entspricht und die Schwingelemente mit umgekehrter Polarität zu betreiben, beispielsweise indem ein für beide Schwingelemente genutztes Anregungssignal für eines der Schwingelemente invertiert wird, oder indem eines der Schwingelemente mit umgekehrter Polarität montiert wird. Besonders bevorzugt kann die Anregungsfrequenz so gewählt werden, dass genau eine langwellige und genau eine kurzwellige Schwingungsmode anregbar sind, wobei die langwellige Schwingungsmode die doppelte Wellenlänge der kurzwelligen Schwingungsmode aufweist. Dies führt dazu, dass bei dem obig erläuterten Vorgehen nicht nur eine destruktive Interferenz für die zu dämpfende Schwingungsmode resultiert, sondern zusätzlich eine optimale konstruktive Interferenz für die verbleibende Schwingungsmode, womit ein besonders hoher Signal-zu-Rausch-Abstand bei der Anregung erreicht werden kann. Wird zudem der Abstand zwischen den Mitten der Anregungsbereiche so gewählt, dass er der Wellenlänge der kurzwelligen Schwingungsmode entspricht, kann durch ein Umschalten der Anregungspolarität eines der Schwingelemente gewählt werden, welche der Moden im Wesentlichen modenrein angeregt werden soll.

Das erläuterte Vorgehen führt bereits zu einer sehr guten Modenreinheit, wobei bei Nutzung der gleichen Hüllkurve für die Anregungspulse an beiden Schwingelementen zu Beginn und Ende des Anregungspulses typischerweise keine optimale destruktive Interferenz erreicht wird. Es ist daher vorteilhaft, wenn der erste und der zweite Schwingungswandler zur Anregung der geführten Welle derart angesteuert werden, dass der zeitliche Verlauf der Schwingungsamplitude des zweiten Schwingelements dem um eine Verzögerungszeit verzögerten zeitlichen Verlauf der Schwingungsamplitude des ersten Schwingelements entspricht. Vorzugsweise entspricht die Verzögerungszeit der Laufzeit der zu dämpfenden Schwingungsmode von dem ersten Schwingelement zu dem zweiten Schwingelement. Eine Möglichkeit hierfür ist es, ein gemeinsames Ansteuersignal für das erste und zweite Schwingelement zu nutzen, wobei durch ein Verzögerungsglied, das beispielsweise in der Steuereinrichtung vorgesehen werden kann, das dem zweiten Schwingelement zugeführte Signal um die Verzögerungszeit verzögert wird. Wird das zweite Schwingelement nun mit umgekehrter Polarität betrieben, beispielsweise indem das Steuersignal zusätzlich invertiert wird, resultiert eine im Wesentlichen vollständig destruktive Interferenz für die zu dämpfende Mode und somit eine hochgradig modenreine Anregung. Die Nutzung eines solchen Verzögerungsglieds ist zudem auch vorteilhaft da bei einer Änderung der Wellenlänge der zu dämpfenden Schwingungsmode, beispielsweise weil eine andere Mode bedämpft werden soll oder weil sich die Anregungsfrequenz ändert, nur die Verzögerungszeit geändert werden muss.

Durch wenigstens eines der Kontaktelemente kann genau eine der Elektroden genau eines der Schwingelemente elektrisch und mechanisch kontaktiert werden. Hierdurch ist es möglich, dass die Schwingelemente durch die Steuereinrichtung auf unterschiedliche Weise angesteuert werden können. Beispielsweise kann eine Ansteuerung mit invertierten und/oder verzögerten Anregungssignalen erfolgen, um eine modenselektive Anregung und insbesondere eine modenselektive Anregung für eine wählbare Mode zu erreichen.

Es ist auch möglich, dass wenigstens ein gemeinsames Kontaktelement eine jeweilige Elektrode wenigstens zweier der Schwingelemente elektrisch und mechanisch kontaktiert. Hierbei ist es möglich, dass nur ein solches gemeinsames Kontaktelement genutzt wird, beispielsweise um für jeweils eine der Elektroden ein Referenzpotenzial bereitzustellen, demgegenüber das jeweilige Schwingelement durch die Steuereinrichtung mit einer Steuerspannung beaufschlagt wird. Es ist jedoch auch möglich, dass beide jeweiligen Elektroden über ein jeweiliges gemeinsames Kontaktelement kontaktiert werden. Dies ermöglicht einen besonders einfachen Aufbau der Messeinrichtung.

Das gemeinsame Kontaktelement kann zwei getrennte, insbesondere plattenförmige, Kontaktabschnitte aufweisen, die ausschließlich über einen, insbesondere plattenförmigen, Verbindungsabschnitt, der von den Schwingelementen beabstandet angeordnet ist, verbunden sind. Die Kontaktabschnitte können insbesondere ausschließlich durch den Verbindungsabschnitt mechanisch gehaltert sein. Vorzugsweise sind die Kontaktabschnitte und der Verbindungsabschnitt einstückig ausgeführt, beispielsweise gemeinsam aus einem Blech geschnitten, gestanzt oder ähnliches. Das gemeinsame Kontaktelement kann beispielsweise eine Y- bzw. Stimmgabelform aufweisen.

Der Schwingungswandler kann ein Gehäuse aufweisen, in dem die Schwingelemente durch die Kontaktelemente gehaltert sind. Das Gehäuse kann einerseits dazu dienen, die Schwingelemente in einer definierten Position zueinander zu haltern. Andererseits kann es die Schwingelemente vor Umwelteinflüssen schützen. Beispielsweise kann das Gehäuse die Schwingelemente gemeinsam mit dem Messrohr allseitig umgeben und hierbei beispielsweise staub- und spritzwasserdicht oder gar wasser- oder gasdicht sein.

Die Herstellung und/oder Wartung der Messeinrichtung kann vereinfacht werden, wenn der Schwingungswandler als geschlossene Einheit vorliegt, also die Schwingelemente bereits vor dem Anbringen des Schwingungswandlers ab dem Messrohr gekapselt sind. Dies ist beispielsweise möglich, indem das Gehäuse durch eine Schwingmembran oder Schwingplatte abgeschlossen wird, wie im Folgenden erläutert wird.

Das Kopplungselement kann eine Schwingmembran oder eine Schwingplatte sein, die sich über die Anregungsbereiche der Schwingelemente des ersten Schwingungswandlers hinweg erstreckt. Ist ein Gehäuse vorgesehen, so kann diese Schwingmembran oder Schwingplatte an dem Gehäuse befestigt sein, beispielsweise mit diesem verschweißt sein oder ähnliches. Die Schwingmembran kann beispielsweise eine Folie sein. Prinzipiell ist die Nutzung einer solchen Schwingmembran oder Schwingplatte jedoch auch ohne zusätzliches Gehäuse bzw. bei offenliegenden Schwingelementen möglich.

Der Schwingungswandler kann ein Gehäuse aufweisen, das eine sich über die messrohrabgewandten Seitenflächen der Schwingelemente hinaus erstreckende Gehäusewand aufweist, wobei die Kontaktelemente sich durch die Gehäusewand hindurch erstrecken. Dies ist insbesondere vorteilhaft, wenn die Schwingelemente, wie obig erläutert, vor Umwelteinflüssen geschützt werden sollen. Die Schwingelemente können in dem Gehäuse gekapselt sein, wobei dennoch eine einfache Kontaktierung über die durch die Gehäusewand geführten Kontaktelemente möglich ist.

Wenigstens eines der Kontaktelemente kann aus einem Blech oder einem leitfähigen Elastomer, das insbesondere an ein Gehäuse des Schwingungswandlers angespritzt ist, bestehen. Ein aus Blech bestehendes Kontaktelement kann beispielsweise aus einem Blech geschnitten oder gestanzt werden und somit sehr einfach hergestellt werden. Auch ein Anspritzen eines leitfähigen Elastomers an ein Gehäuse ermöglicht eine einfache Herstellung der Messeinrichtung. Das Elastomer kann sich hierbei zusätzlich in zumindest einem Teil des Bereichs zwischen der messrohrabgewandten Seite des Schwingelements und dem Gehäuse befinden, um das Schwingelement zusätzlich zu stützen. Um hierbei ein Kurzschließen der Kontaktelemente über die messrohrabgewandte Elektrode und/oder eine starke Beeinflussung des Schwingverhaltens des Schwingelements zu vermeiden, ist es vorteilhaft, wenn, wie im Folgenden erläutert werden wird, Elektroden an dem Schwingelement genutzt werden, die auf die jeweils gegenüberliegende Schwingkörperseite gezogen sind.

In der erfindungsgemäßen Messeinrichtung kann entweder die messrohrseitige Elektrode ausschließlich an der messrohrseitigen Seitenfläche und genau einer der Stirnflächen und die messrohrabgewandte Elektrode ausschließlich an der messrohrabgewandten Seitenfläche und genau eine andere der Stirnflächen angeordnet sein, oder die messrohrseitige und die messrohrabgewandte Elektrode können an der jeweiligen Stirnfläche und der messrohrseitigen Seitenfläche und der messrohrabgewandten Seitenfläche angeordnet sein. Es wird somit ein zumindest näherungsweise symmetrischer Aufbau der Elektroden vorgeschlagen, wodurch eine Störung der Eigenschwingungen des Schwingelements durch eine asymmetrische Beeinflussung der mechanischen Eigenschaften bzw. ein asymmetrisches Anliegen von Feldern vermieden werden kann.

In dem Fall, dass sich die Elektroden jeweils sowohl auf der messrohrseitigen als auch auf der messrohrabgewandten Seitenfläche erstrecken, resultieren, insbesondere in Randbereichen, die an die Stirnflächen angrenzenden, Bereiche, in denen sowohl messrohrseitig als auch messrohrabgewandt die gleiche Elektrode vorhanden ist. Somit resultieren im Schwingkörper auch bei einem Anlegen einer Spannung zwischen den beiden Elektroden in den Randbereichen nur sehr geringe Felder, womit diese Randbereiche bei einer Anregung des Schwingelements zu Schwingungen auch nur mit sehr geringer Amplitude schwingen. Hierdurch wird eine Schwingungskopplung zwischen dem Schwingelement und den Kontaktelementen weiter reduziert, womit einerseits der Einfluss der Kontaktierung auf die Eigenmoden des Schwingelements und andererseits die Einkopplung von Schwingungen über die Kontaktelemente in das Gehäuse reduziert werden kann. Zudem kann erreicht werden, dass sich benachbart zu den Stirnflächen an der messrohrabgewandten Seite des Schwingelements stets die gleiche Elektrode vorhanden ist, wie an der Stirnfläche, wodurch, wie obig erläutert wurde, auch Kontaktelemente verwendet werden können, die das Schwingelement zusätzlich zur Kontaktierung an der Stirnfläche an der messrohrabgewandten Seitenfläche stützen.

Weitere Vorteile und Einzelheiten der Erfindung ergeben sich aus den folgenden Ausführungsbeispielen und den zugehörigen Zeichnungen. Hierbei zeigen schematisch:
- Fig. 1 und 2: Verschiedene Ansichten eines Ausführungsbeispiels einer erfindungsgemäßen Messeinrichtung, und
- Fig. 3 und 4: Detailansichten weiterer Ausführungsbeispiele einer erfindungsgemäßen Messeinrichtung.

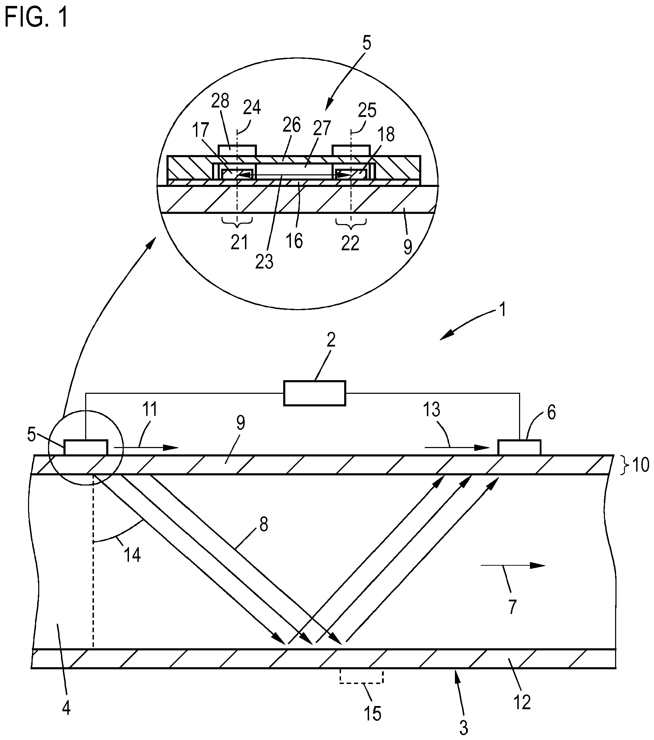

Fig. 1 zeigt eine Messeinrichtung 1 zur Ermittlung einer ein Fluid und/oder eine Fluidströmung betreffenden Fluidgröße. Das Fluid wird hierbei in eine durch den Pfeil 7 gezeigte Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs 3 zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle in der Seitenwand 9 des Messrohrs 3 angeregt. Die Anregung erfolgt mit einer Frequenz, die derart gewählt ist, dass eine Lamb-Welle in der Seitenwand 9 angeregt wird. Solche Wellen können angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle in der Seitenwand 9 an, die schematisch durch den Pfeil 13 dargestellt ist und die durch den Schwingungswandler 6 erfasst werden kann, um die Laufzeit zu bestimmen. Alternativ oder ergänzend ist es möglich, die abgestrahlten Ultraschallwellen über einen Schwingungswandler 15 zu erfassen, der an der Seitenwand 12 angeordnet ist. Im gezeigten Beispiel werden die Ultraschallstrahlen 8 auf ihrem Pfad zum Schwingungswandler 6, 15 nicht bzw. nur einmal an den Seitenwänden 9, 12 reflektiert. Es wäre selbstverständlich möglich, eine längere Messstrecke zu nutzen, wobei die Ultraschallstrahlen 8 mehrfach an den Seitenwänden 9, 12 reflektiert werden.

Bei dem geschilderten Vorgehen kann es problematisch sein, dass die Dispersionsrelation für Lamb-Wellen in der Seitenwand 9 mehrere Zweige aufweist. Bei einer Anregung mit einer bestimmten durch die Steuereinrichtung 2 vorgegebenen Frequenz wäre es somit möglich, dass unterschiedliche Schwingungsmoden für die Lamb-Welle angeregt werden, die unterschiedliche Phasengeschwindigkeiten aufweisen. Dies führt dazu, dass die Kompressionswellen in Abhängigkeit dieser Phasengeschwindigkeiten unter unterschiedlichen Rayleigh-Winkeln 14 abgestrahlt werden. Hieraus resultieren verschiedene Pfade für die Führung der Ultraschallwelle von dem Schwingungswandler 5 zu dem Schwingungswandler 6 und umgekehrt, die typischerweise unterschiedliche Laufzeiten aufweisen. Die empfangenen Signale für diese verschiedenen Ausbreitungspfade müssten somit durch eine aufwendige Signalverarbeitung durch die Steuereinrichtung 2 separiert werden, um die Fluidgröße bestimmen zu können. Dies erfordert einerseits eine aufwendige Steuereinrichtung und ist andererseits nicht in allen Anwendungsfällen robust möglich. Daher soll in dem Schwingungswandler 5 eine möglichst modenreine Anregung von geführten Wellen erfolgen.

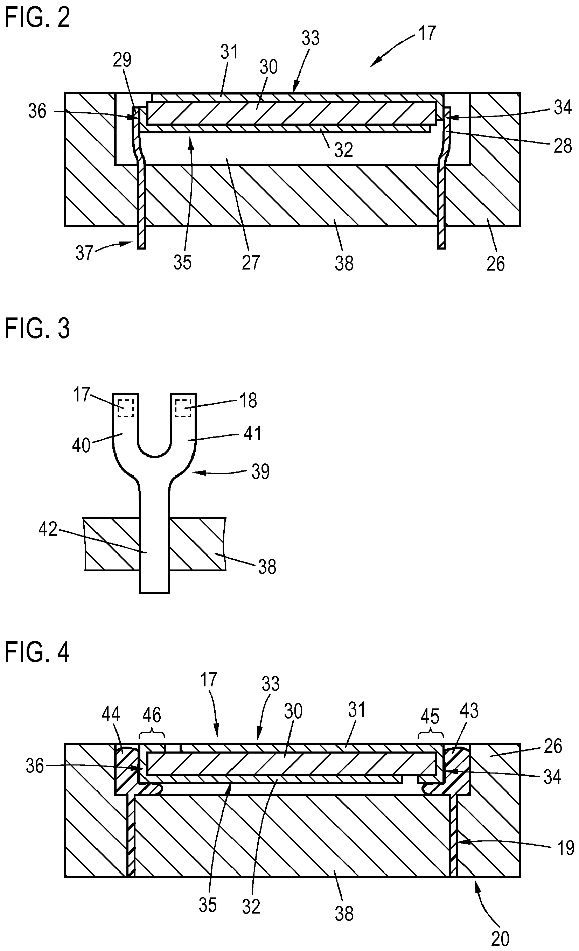

Um eine weitgehend modenreine Anregung einer in der Seitenwand 9 geführten Gesamtwelle zu erreichen, wird ein Schwingungswandler 5 genutzt, der mehrere in beabstandeten Anregungsbereichen 21, 22 angeordnete Schwingelemente 17, 18 umfasst. Die Anordnung soll derart erfolgen, dass die Mitten 24, 25 der Anregungsbereiche 21, 22 einen definierten Abstand 23 aufweisen, was, wie später noch genauer erläutert werden wird, für die modenreine Anregung wesentlich ist. Um gleichzeitig eine genaue Positionierung und eine Kontaktierung der Schwingelemente 17, 18 mit geringem Aufwand zu ermöglichen, werden diese nicht einzeln an der Seitenwand 9 angeordnet, sondern sie werden durch die jeweiligen Kontaktelemente 28, 29, wie in Fig. 2 detailliert dargestellt ist, in einer Ausnehmung 27 eines Gehäuses 26 gehaltert, sodass das Gehäuse 26 mit den über die Kontaktelementen 28, 29 daran gehalterten Schwingelementen 17, 18 anschließend als ein Modul an der Seitenwand 9 angeordnet werden kann.

Wie in Fig. 1 dargestellt ist, kann es hierbei vorteilhaft sein, zusätzlich ein Kopplungselement 16, beispielsweise eine dünne Folie oder eine Schwingplatte, zu nutzen, die zwischen den Schwingelementen 17, 18 und den jeweiligen Anregungsbereichen 21, 22 der Seitenwand 9 angeordnet ist. Durch das Anbringen eines solchen Kopplungselements 16 an dem Gehäuse 26 wird der Schwingungswandler 5 als kompaktes Modul bereitgestellt. Dies erleichtert einerseits die Handhabung der Schwingelemente 17, 18 im Rahmen des Zusammenbaus der Messeinrichtung 1 und dient zum anderen zur Kapselung der Schwingelemente 17, 18 gegenüber Umwelteinflüssen.

Wie in Fig. 2 detailliert dargestellt ist, bestehen die Schwingelemente 17, 18 jeweils aus einem Schwingkörper 30, einer messrohrseitigen Elektrode 33 und einer messrohrabgewandten Elektrode 32. Die messrohrseitige Elektrode 33 ist hierbei an der dem Messrohr zugewandten Seitenfläche 33 angeordnet und erstreckt sich bis auf die erste Stirnfläche 34, an der sie durch das Kontaktelement 28 elektrisch kontaktiert wird. Entsprechend erstreckt sich die messrohrabgewandte Elektrode 32 einerseits über die messrohrabgewandte Seitenfläche 35 und andererseits bis auf die zweite Stirnfläche 36, wo sie durch das Kontaktelement 29 elektrisch kontaktiert wird. Die Kontaktelemente 28, 29 sind am Gehäuse 26 befestigt und klemmen gemeinsam das jeweilige Kontaktelement 17, 18, sodass dieses jeweils mechanisch gehaltert wird.

Die Kontaktelemente 28, 29 sind jeweils aus Blech hergestellt, beispielsweise geschnitten oder gestanzt, und weisen eine gewisse Elastizität auf, sodass sie beim Einsetzen des jeweiligen Schwingelements 17, 18 zwischen die jeweiligen Kontaktelemente 28, 29 elastisch verformt werden und somit eine gewisse Presskraft auf das Schwingelement 17, 18 aufbringen und dieses somit kraftschlüssig haltern. Hierbei werden die Schwingelemente 17, 18 jeweils über separate Kontaktelemente 28, 29 kontaktiert. Dies ermöglicht es, für die Schwingelemente 17, 18 unterschiedliche Steuersignale bzw. Steuersignale unterschiedlicher Polarität bereitzustellen, womit beispielsweise eine modenselektive Anregung unterschiedliche Schwingungsmoden je nach Ansteuerung durch die Steuereinrichtung 2 ermöglicht wird. Das nicht am Schwingelement 17, 18 anliegende Ende 37 der Kontaktelemente 28, 29 ist jeweils durch eine Gehäusewand 38 des Gehäuses 26 hindurchgeführt, die die Ausnehmung 27 an der messrohrabgewandten Seite begrenzt. Hierdurch ist eine einfache Kontaktierung der Schwingelemente 17, 18 von der Gehäuserückseite her möglich, wobei zugleich die Schwingelemente 17, 18 in dem Gehäuse gekapselt sein können, um sie vor Umwelteinflüssen zu schützen und ihre Handhabbarkeit zu verbessern.

Nicht in allen Anwendungsfällen ist es erforderlich, dass den messrohrseitigen Elektroden 33 und den messrohrabgewandten Elektroden 32 der beiden Schwingelemente 17, 18 unterschiedliche Signale zugeführt werden können müssen. Beispielsweise kann es möglich sein, dass beide messrohrseitigen Elektroden 33 oder beide messrohrabgewandten Elektroden 32 oder jeweils eine dieser Elektroden auf ein bestimmtes Bezugspotenzial gelegt werden sollen und nur die jeweils verbleibende Elektrode der Schwingelemente 17, 18 separat angesteuert werden können soll. In diesem Fall kann der Aufbau der Messeinrichtung 1 weiter vereinfacht werden, beispielsweise indem das in Fig. 3 gezeigte gemeinsame Kontaktelement 39 statt dem Kontaktelement 28 oder 29 genutzt wird. Dieses weist zwei getrennte, plattenförmige Kontaktabschnitte 40, 41 auf, die jeweils dazu dienen, die in Fig. 3 nur schematisch angedeuteten Schwingelemente 17, 18 zu kontaktieren bzw. zu haltern. Die beiden Kontaktabschnitte 40, 41 sind ausschließlich über einen plattenförmigen Verbindungsabschnitt 42 verbunden, in dem das Kontaktelement 39 an dem Gehäuse 26 befestigt sein kann bzw. der dazu dienen kann, das Kontaktelement 39 durch die Gehäusewand 38 zu führen, um eine rückseitige Kontaktierung zu ermöglichen. Durch den in Fig. 3 dargestellten Y-artigen Aufbau wird erreicht, dass die beiden Schwingelemente 17, 18 mit sehr geringem Aufwand kontaktiert werden können, wobei zugleich eine Schwingungskopplung zwischen den Schwingelementen 17, 18 durch die Nutzung separater Kontaktabschnitte 40, 41 weitgehend vermieden wird. Das Kontaktelement 39 kann beispielsweise aus Blech hergestellt sein, beispielsweise aus einem Blech gestanzt oder geschnitten sein.

Fig. 4 zeigt eine weitere Möglichkeit, Kontaktelemente 43, 44 auszugestalten, die einerseits die Elektroden 31, 32 an den Stirnflächen 34, 36 kontaktieren und andererseits durch die hierbei aufgebrachte mechanische Kraft die Schwingelemente 17, 18 klemmen und somit ortsfest haltern. In dem in Fig. 4 gezeigten Ausführungsbeispiel werden die Kontaktelemente 43, 44 durch ein leitfähiges Polymer gebildet, das beispielsweise an das Gehäuse 26 angeschäumt oder angespritzt ist. Die Kontaktelemente 43, 44 werden dabei so dimensioniert, dass sie beim Einsetzen des jeweiligen Schwingelements 17, 18 in Querrichtung in Fig. 4 zusammengedrückt werden, wodurch sie nach dem Einsetzen der Schwingelemente 17, 18 eine Klemmkraft auf die Stirnflächen 34, 36 ausüben und die Schwingelemente 17, 18 somit kraftschlüssig haltern. In dem gezeigten Ausführungsbeispiel weist das Gehäuse 26 zudem Durchbrechungen 19 auf, die ebenfalls mit dem leitfähigen Polymer ausgefüllt sind, sodass auch in diesem Ausführungsbeispiel die Kontaktelemente 43, 44 durch die Gehäusewand 38 hindurch zur Rückseite 20 des Gehäuses 26 geführt sind, wo sie problemlos auch nach dem Anbringen des Gehäuses 26 und damit der Schwingelemente 17, 18 am Messrohr 3 über die Rückseite 20 kontaktiert werden können.

Auch bei einer Nutzung eines leitfähigen Polymers wäre es prinzipiell, wie vorangehend erläutert, möglich, dass die Kontaktelemente 43, 44 die Schwingelemente 17, 18 ausschließlich an den Stirnflächen 34, 36 mechanisch und elektrisch kontaktieren. Es kann jedoch vorteilhaft sein, wenn die Kontaktelemente 43, 44 das Schwingelement 17, 18 zusätzlich an der messrohrabgewandten Seitenfläche 35 abstützen, wie dies in Fig. 4 dargestellt ist.

Um hierbei zusätzlich die Kontaktierung der messrohrseitigen Elektrode 31 zu verbessern, ist diese im Randbereich 45 bis auf die messrohrabgewandte Seitenfläche 35 des Schwingkörpers 30 gezogen. Da eine asymmetrische Anordnung der Elektroden 31, 32 zu antisymmetrischen Schwingungsmoden führen kann, was potenziell einer modenreinen Anregung von geführten Wellen entgegenstehen kann, ist zudem die messrohrabgewandte Elektrode 32 im Randbereich 46 bis auf die messrohrzugewandte Seitenfläche 33 des Schwingkörpers 30 gezogen. Eine derartige Anordnung der Elektroden 31, 32 kann zudem vorteilhaft sein, da in den Randbereichen 45, 46 aufgrund der an beiden Seitenflächen 33, 35 angeordneten gleichen jeweiligen Elektrode 31, 32 auch bei einer Spannungsbeaufschlagung der Schwingelemente 17, 18 nur sehr geringe Feldstärken resultieren, womit in den Randbereichen 45, 46 auch die Schwingungsamplituden klein sind. Dies entlastet zum einen die mechanischen Kontakte, die zur Halterung der Schwingelemente 17, 18 dienen und reduziert zum anderen die Schwingungseinkopplung in das Gehäuse 26. Zudem kann eine Störung der Eigenmoden der Schwingelemente 17, 18 durch eine Kopplung mit dem Gehäuse durch ein derartiges Vorgehen verringert werden. Es kann daher auch vorteilhaft sein, eine solche Elektrodenanordnung dann zu nutzen, wenn die Elektroden 31, 32 ausschließlich über die Stirnflächen 36, 37 kontaktiert werden, wie vorangehend zur Fig. 2 und 3 erläutert wurde.

### Bezugszeichenliste

- 1: Messeinrichtung
- 2: Steuereinrichtung
- 3: Messrohr
- 4: Innenraum
- 5: erster Schwingungswandler
- 6: zweiter Schwingungswandler
- 7: Pfeil
- 8: Ultraschallstrahl
- 9: Seitenwand
- 10: Dicke
- 11: Pfeil
- 12: Seitenwand
- 13: Pfeil
- 14: Winkel
- 15: Schwingungswandler
- 16: Kopplungselement
- 17: Schwingelement
- 18: Schwingelement
- 19: Durchbrechung
- 20: Rückseite
- 21: Anregungsbereich
- 22: Anregungsbereich
- 23: Abstand
- 24: Mitte
- 25: Mitte
- 26: Gehäuse
- 27: Ausnehmung
- 28: leitfähiges Kontaktelement
- 29: leitfähiges Kontaktelement
- 30: Schwingkörper
- 31: messrohrseitige Elektrode
- 32: messrohrabgewandte Elektrode
- 33: messrohrseitige Seitenfläche
- 34: erste Stirnfläche
- 35: messrohrabgewandte Seitenfläche
- 36: zweite Stirnfläche
- 37: Stirnfläche
- 38: Gehäusewand
- 39: leitfähiges Kontaktelement
- 40: Kontaktabschnitt
- 41: Kontaktabschnitt
- 42: Verbindungsabschnitt
- 43: leitfähiges Kontaktelement
- 44: leitfähiges Kontaktelement
- 45: Randbereich
- 46: Randbereich

## Patentansprüche

1. Messeinrichtung zur Ermittlung einer ein Fluid und/oder eine Fluidströmung des Fluids betreffenden Fluidgröße mit einer Steuereinrichtung (2), einem Messrohr (3), das dazu dient, das Fluid aufzunehmen und/oder zu führen, und einem an dem Messrohr (3) angeordneten ersten Schwingungswandler (5), wobei der erste Schwingungswandler (5) wenigstens ein Schwingelement (17, 18) umfasst, wobei das Schwingelement (17, 18) einen Schwingkörper (30), eine messrohrseitige Elektrode (31), die an einer messrohrseitigen Seitenfläche (33) des jeweiligen Schwingkörpers (30) angeordnet ist, und eine messrohrabgewandte Elektrode (32), die an einer der messrohrseitigen Seitenfläche (33) gegenüberliegenden, messrohrabgewandten Seitenfläche (35) des Schwingkörpers (30) angeordnet ist, umfasst, wobei sich die messrohrseitige Elektrode (31) auf eine erste Stirnfläche (34) des Schwingkörpers (30) erstreckt, die gewinkelt zu der messrohrseitigen und der messrohrabgewandten Seitenfläche (33, 35) steht, wobei sich die messrohrabgewandte Elektrode (32) auf eine zweite Stirnfläche (36) erstreckt, die der ersten Stirnfläche (34) gegenüberliegt, wobei ein jeweiliges leitfähiges Kontaktelement (28, 29, 39, 43, 44) die messrohrseitige Elektrode (31) an der ersten Stirnfläche (34) und die messrohrabgewandte Elektrode (32) an der zweiten Stirnfläche (36) elektrisch und mechanisch derart kontaktiert, dass das Schwingelement (17, 18) durch die die Kontaktelemente (28, 29, 39, 43, 44) gehaltert ist, wobei durch die Steuereinrichtung (2) über diese elektrische Kontaktierung eine Spannung zwischen der messrohrseitigen und der messrohrabgewandten Elektrode (31, 32) variierbar ist, um durch das Schwingelement (17, 18) eine in einer Seitenwand (9) des Messrohrs (3) geführte Welle anzuregen, die direkt über die Seitenwand (9) oder indirekt über das Fluid zu einem an dem Messrohr (3) angeordneten zweiten Schwingungswandler (6) oder zurück zu dem ersten Schwingungswandler (5) führbar und dort durch die Steuereinrichtung (2) zur Ermittlung von Messdaten erfassbar ist, wobei die Fluidgröße durch die Steuereinrichtung (2) in Abhängigkeit der Messdaten ermittelbar ist.

2. Messeinrichtung nach Anspruch 1, **dadurch gekennzeichnet, dass** das Schwingelement (17, 18) kraftschlüssig durch die Kontaktelemente (28, 29, 39, 43, 44) gehaltert ist.

3. Messeinrichtung nach Anspruch 1 oder 2, **dadurch gekennzeichnet, dass** wenigstens eines der Kontaktelemente (28, 29, 39, 43, 44) durch den mechanischen Kontakt mit dem Schwingelement (17, 18) elastisch verformt ist.

4. Messeinrichtung nach einem der vorangehenden Ansprüche, **dadurch gekennzeichnet, dass** wenigstens eines der Kontaktelemente (28, 29, 39) eine Platte ist oder umfasst, die sich im Wesentlichen parallel zu der durch das Kontaktelement (28, 29, 39, 43, 44) kontaktierten Stirnfläche (34, 36) erstreckt, wobei die Platte durch den Kontakt mit dem Schwingelement (17, 18) elastisch gebogen ist.

5. Messeinrichtung nach einem der vorangehenden Ansprüche, **dadurch gekennzeichnet, dass** der erste Schwingungswandler (5) mehrere der Schwingelemente (17, 18) aufweist, die direkt oder über ein Kopplungselement (16) mit einem jeweiligen Anregungsbereich (21, 22) der Seitenwand (9) schwingungsgekoppelt sind, wobei die Steuereinrichtung (2) dazu eingerichtet ist, die Schwingelemente (17, 18) derart anzusteuern, dass in den Anregungsbereichen (21, 22) jeweils eine in der Seitenwand (9) geführte Teilwelle angeregt wird, wobei sich die Teilwellen zu der geführten Welle überlagern, wobei eine zu dämpfende Schwingungsmode durch eine destruktive Interferenz der Teilwellen zumindest teilweise ausgelöscht wird.

6. Messeinrichtung nach Anspruch 5, **dadurch gekennzeichnet, dass** wenigstens eines der Kontaktelemente (28, 29, 43, 44) genau eine der Elektroden (31, 32) genau eines der Schwingelemente (17, 18) elektrisch und mechanisch kontaktiert.

7. Messeinrichtung nach Anspruch 5 oder 6, **dadurch gekennzeichnet, dass** wenigstens ein gemeinsames Kontaktelement (39) eine jeweilige Elektrode (31, 32) wenigstens zweier der Schwingelemente (17, 18) elektrisch und mechanisch kontaktiert.

8. Messeinrichtung nach Anspruch 7, **dadurch gekennzeichnet, dass** das gemeinsame Kontaktelement (39) zwei getrennte, insbesondere plattenförmige, Kontaktabschnitte (40, 41) aufweist, die ausschließlich über einen, insbesondere plattenförmigen, Verbindungsabschnitt (42), der von den Schwingelementen beabstandet angeordnet ist, verbunden sind.

9. Messeinrichtung nach einem der Ansprüche 5 bis 8, **dadurch gekennzeichnet, dass** das Kopplungselement (16) eine Schwingmembran oder eine Schwingplatte ist, die sich über die Anregungsbereiche (21, 22) der Schwingelemente (17, 18) des ersten Schwingungswandlers (5) hinweg erstreckt.

10. Messeinrichtung nach einem der Ansprüche 5 bis 9, **dadurch gekennzeichnet, dass** der Schwingungswandler (5) ein Gehäuse (26) aufweist, das eine sich über die messrohrabgewandten Seitenflächen (35) der Schwingelemente (17, 18) hinweg erstreckende Gehäusewand (38) aufweist, wobei die Kontaktelemente (28, 29, 39, 43, 44) sich durch die Gehäusewand (38) hindurch erstrecken.

11. Messeinrichtung nach einem der vorangehenden Ansprüche, **dadurch gekennzeichnet, dass** wenigstens eines der Kontaktelemente (28, 29, 39, 43, 44) aus einem Blech oder einem leitfähigen Elastomer, das insbesondere an ein Gehäuse (26) des Schwingungswandlers angespritzt ist, besteht.

12. Messeinrichtung nach einem der vorangehenden Ansprüche, **dadurch gekennzeichnet, dass** entweder die messrohrseitige Elektrode (31) ausschließlich an der messrohrseitigen Seitenfläche (33) und genau einer der Stirnflächen (34) und die messrohrabgewandte Elektrode (32) ausschließlich an der messrohrabgewandten Seitenfläche (35) und der anderen Stirnfläche (36) angeordnet ist, oder dass die messrohrseitige und die messrohrabgewandte Elektrode (31, 32) an der jeweiligen Stirnfläche (34, 36) und der messrohrseitigen Seitenfläche (33) und der messrohrabgewandten Seitenfläche (35) angeordnet sind.
